# EUROPÄISCHE PATENTSCHRIFT

(11) **EP 1 779 066 B1**
(45) Veröffentlichungstag und Bekanntmachung des Hinweises auf die Patenterteilung: **05.03.2014**
(21) Anmeldenummer: 05758496.3
(22) Anmeldetag: 15.07.2005
(51) Int. Cl.: G01C 21/36

(54) **Verfahren, Navigationssystem und Speichereinrichtung zur Darstellung von Karteninformationen**
Method, navigation system and memory device for representing map information
Procédé, système de navigation et dispositif de mémoire pour représenter des informations cartographiques

(30) Priorität: 10.08.2004 DE 102004038739
(43) Veröffentlichungstag der Anmeldung: 02.05.2007
(73) Patentinhaber: ROBERT BOSCH GMBH, 70442 Stuttgart (DE)
(72) Erfinder: JUNG, Thomas, 33613 Bielefeld (DE); SMIRNOV, Lothar-Frank, 70567 Stuttgart (DE)
(86) Internationale Anmeldenummer: PCT/EP2005/053417
(87) Internationale Veröffentlichungsnummer: WO 2006/018358

(56) Entgegenhaltungen:
- EP-A- 1 435 508
- DE-A1- 10 336 581
- US-A1- 2003 236 618
- PATENT ABSTRACTS OF JAPAN Bd. 2000, Nr. 13, 5. Februar 2001 (2001-02-05) -& JP 2000 283784 A (MATSUSHITA ELECTRIC IND CO LTD), 13. Oktober 2000 (2000-10-13)

## Beschreibung

Die vorliegende Erfindung beüifft ein Verfahren zur Darstellung von Karteninformationen für ein Navigationssystem, bei dem die Karteninformation Flächen, mit denen eine Draufsicht auf einen Kartenausschnitt dargestellt wird, und Linien aufweist, mit denen ein Verkehrswegenetz dargestellt wird. Die Erfindung betrifft ferner ein Navigationssystem zur Durchführung des erfindungsgemäßen Verfahrens.

Navigationssysteme haben in den letzten Jahren, insbesondere im mobilen Einsatz in Kraftfahrzeugen, eine weite Verbreitung gefunden. In den bekannten Systemen sind die Grundfunktionen "Ortung", "Zielauswahl", "Routenberechnung" und "Zielführung" implementiert. Für alle Funktionen ist eine digitale Karte des Straßennetzes erforderlich, die üblicherweise auf einer CD-ROM, einer DVD oder einer HD untergebracht und abgespeichert ist.

Zusätzlich ist die Darstellung als bevorzugt farbige Karte möglich. Die Darstellung der Karte auf einem Farbbildschirm kann je nach System über einen Maßstabbereich von ca. 1 zu 8.000 bis 1 zu 16.000.000 erfolgen. Diese Darstellung ist hilfreich, um je nach Maßstab einen Überblick über die Fahrtroute im näheren oder weiteren Umfeld zu erhalten. Die Orientierung wird durch topographische Informationen, beispielsweise bebaute Gebiete, Gewässer, Wälder und Eisenbahnstrecken erleichtert.

In aktuellen Navigationssystemen mit einer Kartendarstellung wird die Information als Vektorkarte auf einem Farbbildschirm angezeigt. Die Vektorisierung ermöglicht die Veränderung des Abbildungsmaßstabes auf Grund derselben zu Grunde liegenden, abgespeicherten Daten.

In dieser Kartendarstellung wird die Gesamtinformation aus Flächen, Linien und Punkten zusammengesetzt. Durch unterschiedliche Farbgebungen der Flächen wird das darzustellenden Gebiet charakterisiert. So wird eine bebaute Fläche, also eine Ortschaft, oftmals mit der Farbe Rot versehen. Mit blauen Flächen werden Gewässer und mit unterschiedlichen Grüntönen Felder bzw. Wälder gekennzeichnet. In der Darstellung werden Linien unterschiedlicher Stärke und Farbe für die verschiedenen Strassen, Eisenbahnstrecken bzw. Flüsse verwendet. Als weiteres Gestaltungselement werden einzelne Punkte bzw. Icons für sogenannte POIs (points of interest), beispielsweise Tankstellen, Werkstätten, Hotels etc., in die Gesamtheit der Kartendarstellung eingefügt.

Die Flächendarstellung ist stark vereinfacht und folglich sehr abstrahiert. Gerade bei einer Darstellung mit höherer Auflösung, also insbesondere der näheren Umgebung, sind der Darstellung keine zusätzlichen Informationen entnehmbar, die dem Anwender die Orientierung erleichtern würden.

Aus der US 2003/236618 A1, der EP 1 435 508 A2, der DE 103 36 581 A1 sowie JP 2000283784 A gehen Vorschläge für Bilddarstellungen bei Navigationssystemen hervor.

Aufgabe der vorliegenden Erfindung ist es daher, die Darstellung der Flächeninformation in Karten für Navigationssysteme durch eine erweiterte Hintergrundinformation zu verbessern.

Diese Aufgabe wird durch ein Verfahren gemäß Anspruch 1 gelöst. Hierbei ist vorgesehen, dass die Darstellung der Flächen in einer 2- oder 3-dimensionalen Ansicht zumindest teilweise anhand von Luft- und/oder Satellitenaufnahmen generiert wird. Diese zusätzliche, strukturierte Hintergrundinformation, beispielsweise Gebäudeumrisse und Bepflanzungen, helfen dem Anwender die Information der Karte auf die reale Umgebung zu übertragen. Hierdurch wird ihm die Orientierung deutlich erleichtert. Durch die 3-dimensionale Ansicht ist eine perspektivische Darstellung ermöglicht.

Eine bevorzugte Ausgestaltung des erfindungsgemäßen Verfahrens sieht vor, dass die Auflösung der Luft- und/oder Satellitenaufnahmen in Abhängigkeit des darzustellenden Kartenausschnitts variiert. Hierdurch ist eine Anpassung der Genauigkeit der Darstellung situationsbedingt ermöglicht.

In einer vorteilhaften Weiterführung des erfindungsgemäßen Verfahrens wird die Auflösung der Luft- und/oder Satellitenaufnahmen in Abhängigkeit von zumindest einem Strukturparameter variiert. Hierdurch ist es möglich, dass die benötigte Datenmenge in sinnvoller Weise reduziert werden kann. So ist es sinnvoll, dass in Gebieten mit größerer Bedeutung eine höhere Auflösung, also eine höhere Genauigkeit der einzelnen darzustellenden Objekte, ausgegeben wird. Für Gebiete mit einer geringeren Bedeutung für die Verwendung eines Navigationssystems kann die Auflösung und damit auch die abzuspeichernde Datenmenge reduziert werden.

Als bevorzugter Strukturparameter wird die durchschnittliche Einwohnerzahl pro Fläche berücksichtigt. Dieser Strukturparameter berücksichtigt den Zusammenhang, dass in Ortschaften, beispielsweise in Städten, die Bevölkerungsdichte deutlich höher ist als in ländlichen Gebieten.

Als ein weiterer vorteilhafter Shukturparameter wird die durchschnittliche Gebäudeanzahl pro Fläche berücksichtigt. Dieser Parameter ist prinzipiell ähnlich zum vorherigen, in dem die Einwohnerzahl berücksichtigt wird, jedoch ist die Gebäudeanzahl pro Fläche direkt aus der Luft- und/oder Satellitenaufnahme entnehmbar, ohne auf andere Quellen, beispielsweise Statistiken der Meldebehörden, zurückgreifen zu müssen.

In einer bevorzugten Weiterführung des erfindungsgemäßen Verfahrens wird zumindest ein Raumpunkt in der Karteninformation mit einem Bildelement markiert. Das Bildelement kann beispielsweise ein Piktogramm oder ein Icon sein, mit dem ein POI in der Karte gekennzeichnet wird.

Eine vorteilhafte Ausgestaltung des erfindungsgemäßen Verfahrens sieht vor, dass ausgewählte Bereiche der Karteninformation hervorgehoben dargestellt werden. Bevorzugt erfolgt das Hervorheben durch eine transparente Einfärbung. Durch die farbliche Hervorhebung können beispielsweise öffentliche Gebäude markiert werden, die sich üblicherweise in der Draufsicht einer Luft- und/oder Satellitenaufnahme von privat genutzten Gebäuden nicht unterscheiden lassen.

Ein Navigationssystem zur Durchführung des erfindungsgemäßen Verfahrens weist eine Speichereinrichtung für Karteninformationsdaten, eine Prozessoreinrichtung, die die Karteninformationsdaten verarbeitet, und eine Darstellungseinrichtung auf, die die verarbeiteten Kartenimformationsdaten ausgibt. In der Speichereinrichtung sind als Karteninformationsdaten sowohl das vektorisierte Straßennetz als auch Bilddaten von Luft- und/oder Satellitenaufnahmen als Flächeninformationsdaten gespeichert. Dabei kann die Speichereinrichtung beliebig, d.h. jede optische und/oder magnetische Speichereinrichtung kann zur Realisierung verwendet werden. Die Prozessoreinrichtung fügt die unterschiedlichen Karteninformationsdaten zusammen, so dass eine einheitliche Darstellung mit Flächen, Linien und Punkten erzeugt wird. Anschließend wird auf der Darstellungseinrichtung, beispielsweise einem Farbmonitor, die zusammengefügte Karte ausgegeben.

Bei einem bevorzugten erfindungsgemäßen Navigationssystem weist die Speichereinrichtung eine CD (Compact Disc) und/oder eine DVD (Digital Versatile Disc) auf. Dies ermöglicht eine einfache Aktualisierung der vorhandenen Daten und/oder ein Austausch für die Anwendung in einem anderen Land oder Staat.

Bevorzugt weist die Speichereinrichtung eines erfindungsgemäßen Navigationssystem Bilddaten von Luft- und/oder Satellitenaufnahmen unterschiedlicher Auflösungen auf. Dies ermöglicht eine unterschiedlich genaue Darstellung je nach Bedeutung des betreffenden Gebietes.

Die Erfindung wird nachfolgend anhand der beigefügten Zeichnungen beispielhaft näher erläutert. Diese zeigen in:
Figur 1 - eine schematische Skizze eines Navigationssystems zur Durchführung des erfindungsgemäßen Verfahrens;
Figur 2 - eine übliche Kartendarstellung für ein Navigationssystem;
Figur 3 - einen Ausschnitt einer Luft- und/oder Satellitenaufnahme; und
Figur 4 - eine mit dem erfindungsgemäßen Verfahren erzeugte Kartendarstellung für ein Navigationssystem.

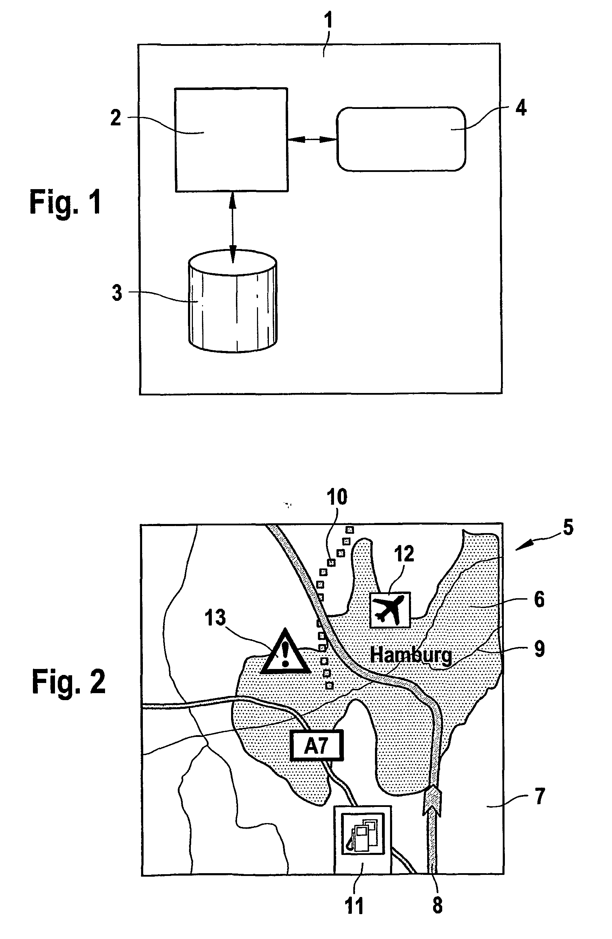

Figur 1 zeigt schematisch ein Navigationssystem 1 mit einer Prozessoreinrichtung 2. Die Prozessoreinrichtung 2 ist mit einer Speichereinrichtung 3 verbunden und verarbeitet die in der Speichereinrichtung 3 abgelegten Karteninformationen. Die von der Prozessoreinrichtung 2 erzeugte Kartendarstellung, beispielsweise eine Überlagerung der vektorisierten Karte des Straßennetzes mit Luft- bzw. Satellitenaufnahmen, wird anschließend auf der Darstellungseinrichtung 4, beispielsweise auf einem Farbmonitor, ausgegeben.

Im folgendem wird das erfindungsgemäße Verfahren detaillierter beschrieben. In der Figur 2 ist ein Kartenausschnitt 5 mit einem Teilgebiet eines Ballungsraumes, im vorliegenden Beispiel der Großraum Hamburg, dargestellt. Die Flächeninformation ist durch im Wesentlichen zwei unterschiedliche Farbgebungen differenziert. Die etwas dunklere Fläche 6 markiert bebautes Gebiet. Die hellere Fläche 7 zeigt an, dass es sich hier im Wesentlichen um Naturflächen, insbesondere Felder bzw. Wälder handelt.

Ferner sind der Figur verschiedene Linien 8, 9 und 10 zu entnehmen, die das Verkehrsnetz anzeigen. Die stärker und farblich deutlicher hervorgehobene Straße 8 ist eine Bundesautobahn, während die mit der Bezugsziffer 9 bezeichnete Straße eine weniger ausgebaute Straße, beispielsweise eine Landstraße bzw. eine innerstädtische Ein- oder Ausfallstraße, wiedergibt Die mit zwei Farben alternierend dargestellte Linie 10 zeigt den Verlauf einer Eisenbahn- bzw. Schienenstrecke.

Ferner befinden sich in der Darstellung des Kartenausschnitts 5 zusätzliche Bildpunkte bzw. Icons zur Kennzeichnung von POIs (point of interest). So ist mit der Bezugsziffer 11 ein Icon zur Darstellung der Lage einer Tankstelle markiert. Mit dem Icon 12 wird die Position des Flughafens und mit dem Icon 13 die Lage einer Verkehrsbehinderung bzw. eines Verkehrsstaus angezeigt.

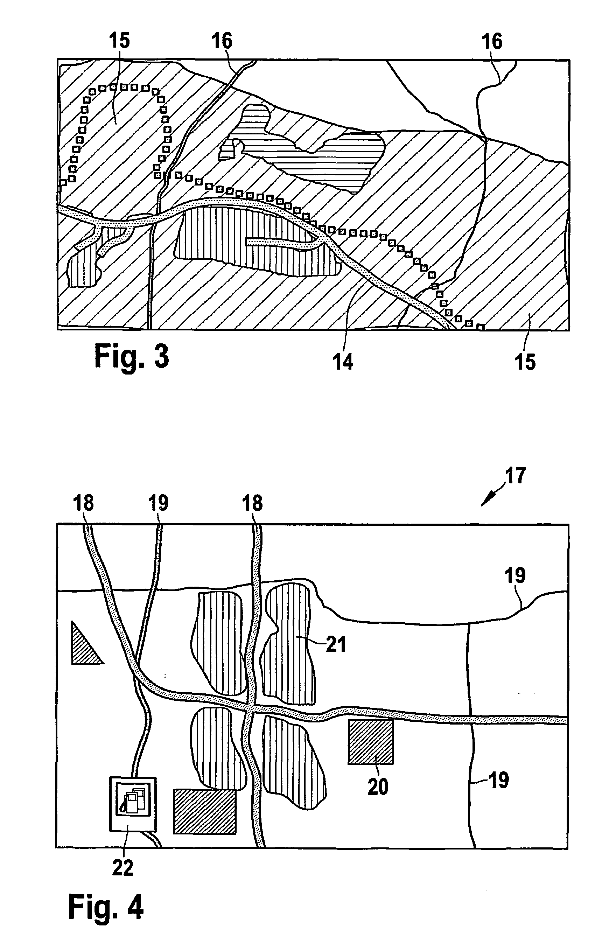

Figur 3 zeigt eine Luft- und/oder Satellitenaufnahme eines innerstädtischen Gebietes. Der Figur 3 sind der Verlauf eines Flusses 14 sowie dicht besiedelte Gebiete 15 zu entnehmen. Ebenfalls sind in der Figur 3 Verläufe von Straßen 16 verschiedener Art und Größe erkennbar.

Figur 4 zeigt einen mit dem erfindungsgemäßen Verfahren generierten Kartenausschnitt 17. Als Hintergrunddaten sind dem Kartenausschnitt 17 Daten einer Luft- und/oder Satellitenaufnahme unterlegt. Auf diesem Hintergrundbild ist als detailliertere Information das vektorisierte Straßennetz überlagernd dargestellt. So sind in dem Kartenausschnitt 17 eine Autobahn 18 sowie weitere Straßen 19 deutlich zu erkennen.

Zwischen den einzelnen Straßen 18, 19 ist nun nicht nur eine monotone Fläche, sondern die reale Struktur des entsprechenden Gebietes zu erkennen. So sieht der Anwender auch in der Anzeige des Navigationssystems, ob sich neben der Straße ein Gebäude 20 oder eine Grünanlage 21 befindet.

Schließlich werden zusätzlich besondere POIs durch Bildpunkte bzw. Icons 22 angezeigt. Die entsprechenden Bildbereiche, beispielsweise der Umriss eines öffentlichen Gebäudes, werden transparent eingefärbt. Dadurch hebt sich dieses Gebäude von der dargestellten Umgebung ab und ist einfacher identifizierbar.

Wenn die strukturierte Hintergrundinformation durch Luft- und/oder Satellitenaufnahmen generiert werden, führt dies zu einer erheblichen Erhöhung der Kartendaten in dem Navigationssystem 1 (Figur 1). Für verschiedene Darstellungsmaßstäbe müssen unterschiedlich hoch aufgelöste Bildinformationen vorgehalten werden. Für Deutschland, mit einer Ausdehnung von etwa 876 mal 632 km, sind in etwa die in folgender Tabelle 1 aufgelisteten Datenmengen zu entnehmen.

**Tabelle 1**

| **Fläche** | **1m Auflösung** | **5m Auflösung** | **20m Auflösung** | **100m Auflösung** |
|---|---|---|---|---|
| 375 tkm² | 140 GB | 6 Gb | 350 MB | 14 MB |

Die vorstehend angegebenen Datenmengen beziehen sich auf ein komprimiertes Datenformat. Diese Angaben sind beispielhaft und dienen nur als grobe Orientierung und können ferner in Abhängigkeit des verwendeten Kompressionsalgorithmus variieren.

Aus diesen Daten ist ersichtlich, dass bei einer hohen Auflösung, beispielsweise 1m, die Gesamtdatenmenge nicht mehr auf handelsüblichen Speichermedien, CD bzw. DVD möglich ist. Eine Reduktion der Auflösung führt aber gerade in den kleineren Darstellungsmaßstäben (50 m - 5 km) zu einer unansehnlichen, nicht akzeptablen Darstellung. Flächendeckend könnte dabei nur mit einer Auflösung mit 10m pro Pixel gearbeitet werden, falls für das gesamte Bundesgebiet die gleiche Auflösung gewählt wird.

Deshalb ist erfindungsgemäß vorgesehen, dass die Auflösung für unterschiedliche Gebiete in Abhängigkeit der Bedeutung ausgewählt wird. Zur Bewertung der Bedeutung wird ein Strukturparameter herangezogen. Dieser Strukturparameter kann beispielsweise die Bevölkerungsdichte in den entsprechenden Gebieten sein.

Bezieht man nun die Bevölkerungsdichte in eine fokussierte Aufteilung der Auflösungen ein, so werden in Bereichen, in denen eine hohe Bevölkerungsdichte vorliegt, detailliertere Bildinformationen verwendet. In zumeist ländlichen Gebieten, die kaum besiedelt sind und somit wenig für die Orientierung relevante Informationen bieten, kommen hingegen nur Daten mit einer gröberen Auflösung zum Einsatz. Dadurch kann bei einer gleichbleibenden Betrachtungsqualität der Datenumfang der gespeicherten Bilddaten deutlich reduziert werden.

In der Tabelle 2 ist eine möglich Aufteilung des Bundesgebietes auf verschieden genaue Auflösungen der Karte wiedergegeben, die den Strukturparameter Bevölkerungsdichte berücksichtigt.

**Tabelle 2**

| **Einwohner pro km²** | **Prozent der D-Landfläche** | **Entsprechende Fläche** | **Auflösung der Karte [m/pixel]** | **Speicherbedarf** |
|---|---|---|---|---|
| weniger als 50 | 10,3 % | 3677,1 km² | 32 | 1 MB |
| 50 bis 100 | 27,1 % | 9674,7 km² | 16 | 12 MB |
| 100 bis 250 | 33,5 % | 11959,5 km² | 8 | 60 MB |
| 250 bis 500 | 15,4 % | 5497,8 km² | 4 | 107 MB |
| mehr als 500 | 13,6 % | 4855,2 km² | 2 | 349 MB |
| Summe: 529 MB | | | | |

Die vorstehend angegebenen Datenmengen beziehen sich auf ein komprimiertes Datenformat. Diese Angaben sind beispielhaft und dienen nur als grobe Orientierung und können ferner in Abhängigkeit des verwendeten Kompressionsalgorithmus variieren.

Wie aus der vorstehend aufgeführten Tabelle ersichtlich, ist die resultierende Speicherkapazität für die Bilddarstellung in einer Größenordnung, die auf handelsübliche Speichermedien, beispielsweise CDs gespeichert werden können. Durch die Verwendung eines Speichermediums mit größerer Speicherkapazität, beispielsweise einer DVD, kann die beispielhafte Aufteilung und Bewertung der Fläche variiert werden, um die Speicherkapazität des Speichermediums optimal auszunutzen.

Alternativ und/oder zusätzlich zu dem Strukturparameter Bevölkerungsdichte kann die Dichte der Bebauung der betreffenden Gebiete als Bewertungskriterium herangezogen werden. Vorteil der Bebauungsdichte als Strukturkriterium ist, dass die Information auf den zugrundeliegenden Luft- und/oder Satellitenaufnahmen selbst vorhanden ist. Eine zusätzliche Datenquelle, beispielsweise die Statistiken der Meldebehörden ist nicht erforderlich.

Als weiterer möglicher Strukturparameter kann auch die Straßendichte auf Grund des vektorisierten Straßennetzes zur Bewertung der Gebiete herangezogen werden. Logischerweise kann auch eine Kombination aller drei Strukturparameter als sinnvoller Bewertungsmaßstab herangezogen werden.

## Patentansprüche

1. Verfahren zur Darstellung von gespeicherten Karteninformationen für ein Navigationssystem, bei dem die Karteninformation Flächen (15), mit denen eine Draufsicht auf einen Kartenausschnitt (5) dargestellt wird, und Linien (8, 9, 10, 16, 19) aufweist, mit denen ein Verkehrswegenetz dargestellt wird, wobei die Darstellung der Flächen in einer 2- oder 3-dimensionalen Ansicht zumindest teilweise anhand von Luft- und/oder Satellitenaufnahmen generiert wird, **dadurch gekennzeichnet, dass** die Auflösung der Luft- und/oder Satellitenaufnahmen in Abhängigkeit von zumindest einem Strukturparameter variiert, der die Bevölkerungsdichte und/oder die Bebauungsdichte in den dargestellten Gebieten beschreibt.

2. Verfahren nach Anspruch 1, **dadurch gekennzeichnet, dass** die Auflösung der Luft- und/oder Satellitenaufnahmen in Abhängigkeit des darzustellenden Kartenausschnitts variiert.

3. Verfahren nach Anspruch 1 oder 2, **dadurch gekennzeichnet, dass** für den Strukturparameter eine durchschnittliche Einwohnerzahl pro Fläche berücksichtigt ist.

4. Verfahren nach einem der Ansprüche 1 bis 3, **dadurch gekennzeichnet, dass** für den Strukturparameter eine durchschnittliche Gebäudeanzahl pro Fläche berücksichtigt ist.

5. Verfahren nach einem der vorstehenden Ansprüche, **dadurch gekennzeichnet, dass** zumindest ein Raumpunkt in der Karteninformation mit einem Bildelement (11, 12, 22) markiert wird.

6. Verfahren nach einem der vorstehenden Ansprüche, **dadurch gekennzeichnet, dass** zumindest ein ausgewählter Bereich der Karteninformationen hervorgehoben dargestellt wird.

7. Verfahren nach Anspruch 6, **dadurch gekennzeichnet, dass** das Hervorheben durch eine transparente Einfärbung erfolgt.

8. Navigationssystem (1) zur Durchführung des Verfahrens nach einem der Ansprüche 1 bis 7 mit:
- einer Speichereinrichtung (3), auf der Karteninformationsdaten gespeichert sind, welche darzustellende Flächen zumindest teilweise in Form von Luft- und/oder Satellitenaufnahmen aufweisen, bei denen die Auflösung in Abhängigkeit von zumindest einem Strukturparameter variiert, der die Bevölkerungsdichte und/oder die Bebauungsdichte im betreffenden Gebiet beschreibt.
- einer Prozessoreinrichtung (2), die die Karteninformationsdaten verarbeitet, und
- einer Darstellungseinrichtung (4), die die verarbeiteten Karteninformationsdaten ausgibt,
wobei die Prozessoreinrichtung (2) zur Erzeugung der Darstellung der Karteninformationen nach dem Verfahren nach einem der Patentansprüche 1 bis 7 auf der Darstellungseinrichtung (4) eingerichtet ist.

9. Navigationssystem nach Anspruch 8, **dadurch gekennzeichnet, dass** die Speichereinrichtung (3) eine Compact Disc (CD) und/oder eine Digital Versatile Disc (DVD) aufweist.

10. Navigationssystem nach Anspruch 8 oder 9, **dadurch gekennzeichnet, dass** die Speichereinrichtung (3) Bilddaten von Luft- und/oder Satellitenaufnahmen unterschiedlicher Auflösungen aufweist.

11. Speichereinrichtung (3) für ein Navigationssystem (1) nach einem der Ansprüche 8 bis 10, wobei auf der Speichereinrichtung (3) Karteninformationsdaten zur Verarbeitung durch eine Prozessoreinrichtung (2) des Navigationssystems (1) gespeichert sind, **dadurch gekennzeichnet, dass** die Karteninformationsdaten darzustellende Flächen zumindest teilweise in Form von Luft- und/oder Satellitenaufnahmen aufweisen, bei denen die Auflösung in Abhängigkeit von zumindest einem Strukturparameter variiert, der die Bevölkerungsdichte und/oder die Bebauungsdichte im betreffenden Gebiet beschreibt.

12. CD, DVD oder HD für eine Speichereinrichtung (3) nach Anspruch 11, auf der Karteninformationsdaten zur Verarbeitung durch eine Prozessoreinrichtung (2) des Navigationssystems (1) gespeichert sind, wobei die Karteninformationsdaten darzustellende Flächen zumindest teilweise in Form von Luft- und/oder Satellitenaufnahmen aufweisen, bei denen die Auflösung in Abhängigkeit von zumindest einem Strukturparameter variiert, der die Bevölkerungsdichte und/oder die Bebauungsdichte im betreffenden Gebiet beschreibt.

## Claims

1. Method for presenting stored map information for a navigation system, in which the map information has areas (15) that are used to present a plan view of a map detail (5) and has lines (8, 9, 10, 16, 19) that are used to present a traffic route network, wherein the presentation of the areas in a 2-dimensional or 3-dimensional view is generated at least in part from aerial and/or satellite photographs, **characterized in that** the resolution of the aerial and/or satellite photographs varies on the basis of at least one structure parameter that describes the density of population and/or the density of building in the presented regions.

2. Method according to Claim 1, **characterized in that** the resolution of the aerial and/or satellite photographs varies on the basis of the map detail that is to be presented.

3. Method according to Claim 1 or 2, **characterized in that** an average number of inhabitants per area is taken into account for the structure parameter.

4. Method according to one of Claims 1 to 3, **characterized in that** an average number of buildings per area is taken into account for the structure parameter.

5. Method according to one of the preceding claims, **characterized in that** at least one spatial point in the map information is marked with an image element (11, 12, 22).

6. Method according to one of the preceding claims, **characterized in that** at least one selected range of the map information is presented in highlighted form.

7. Method according to Claim 6, **characterized in that** the highlighting is effected by means of transparent colouring.

8. Navigation system (1) for carrying out the method according to one of Claims 1 to 7, having:
- a memory device (3), which stores map information data that have areas to be presented at least in part in the form of aerial and/or satellite photographs, for which the resolution varies on the basis of at least one structure parameter that describes the density of population and/or the density of building in the relevant region,
- a processor device (2) that processes the map information data, and
- a presentation device (4) that outputs the processed map information data,
wherein the processor device (2) is set up to produce the presentation of the map information according to the method according to one of Patent Claims 1 to 7 on the presentation device (4).

9. Navigation system according to Claim 8, **characterized in that** the memory device (3) has a compact disc (CD) and/or a digital versatile disc (DVD).

10. Navigation system according to Claim 8 or 9, **characterized in that** the memory device (3) has image data from aerial and/or satellite photographs having different resolutions.

11. Memory device (3) for a navigation system (1) according to one of Claims 8 to 10, wherein the memory device (3) stores map information data for processing by a processor device (2) of the navigation system (1), **characterized in that** the map information data have areas to be presented at least in part in the form of aerial and/or satellite photographs, for which the resolution varies on the basis of at least one structure parameter that describes the density of population and/or the density of building in the relevant region.

12. CD, DVD or HD for a memory device (3) according to Claim 11 that stores map information data for processing by a processor device (2) of the navigation system (1), wherein the map information data have areas to be presented at least in part in the form of aerial and/or satellite photographs, for which the resolution varies on the basis of at least one structure parameter that describes the density of population and/or the density of building in the relevant region.

## Revendications

1. Procédé de représentation d'informations cartographiques mémorisées pour un système de navigation, dans lequel l'information cartographique comporte des surfaces (15) servant à représenter une vue en élévation d'un extrait de carte (5) et comportant des lignes (8, 9, 10, 16, 19) à l'aide desquelles un réseau routier est représenté, la représentation des surfaces étant générée dans une vue bi- ou tridimensionnelle au moins en partie à l'aide de clichés aériens et/ou par satellites, **caractérisé en ce que** la résolution des clichés aériens et/ou par satellites varie en fonction d'au moins un paramètre structurel décrivant la densité de population et/ou la densité de construction des secteurs représentés.

2. Procédé selon la revendication 1, **caractérisé en ce que** la résolution des clichés aériens et/ou par satellites varie en fonction de l'extrait de carte à représenter.

3. Procédé selon la revendication 1 ou 2, **caractérisé en ce qu'**un nombre d'habitants moyen par surface est pris en compte pour le paramètre structurel.

4. Procédé selon l'une quelconque des revendications 1 à 3, **caractérisé en ce qu'**un nombre de bâtiments moyen par surface est pris en compte pour le paramètre structurel.

5. Procédé selon l'une quelconque des revendications précédentes, **caractérisé en ce qu'**au moins un point dans l'espace est marqué d'un élément d'image (11, 12, 22) dans l'information cartographique.

6. Procédé selon l'une quelconque des revendications précédentes, **caractérisé en ce qu'**au moins une zone choisie des informations cartographiques est mise en exergue.

7. Procédé selon la revendication 6, **caractérisé en ce que** la mise en exergue est une coloration transparente.

8. Système de navigation (1) servant à la mise en oeuvre du procédé selon l'une quelconque des revendications 1 à 7, avec :
- un dispositif de mémoire (3) sur lequel des données d'informations cartographiques sont mémorisées comportant des surfaces à représenter au moins en partie sous la forme de clichés aériens et/ou par satellites dans lesquels la résolution varie en fonction d'au moins un paramètre structurel décrivant la densité de population et/ou la densité de construction dans le secteur concerné ;
- un dispositif de traitement (2) traitant les données d'informations cartographiques ; et
- un dispositif de représentation (4) affichant les données d'informations cartographiques traitées ;
le dispositif de traitement (2) étant conçu pour générer la représentation des informations cartographiques selon le procédé selon l'une quelconque des revendications 1 à 7 sur le dispositif de représentation (4).

9. Système de navigation selon la revendication 8, **caractérisé en ce que** le dispositif de mémoire (3) comporte un CD (Compact Disc) et/ou un DVD (Digital Versatile Disc).

10. Système de navigation selon la revendication 8 ou 9, **caractérisé en ce que** le dispositif de mémoire (3) comporte des données d'image de clichés aériens et/ou par satellites de différentes résolutions.

11. Dispositif de mémoire (3) pour un système de navigation (1) selon l'une quelconque des revendications 8 à 10, des données d'informations cartographiques étant mémorisées sur le dispositif de mémoire (3) pour traitement par un dispositif de traitement (2) du système de navigation (1), **caractérisé en ce que** les données d'informations cartographiques comportent des surfaces à représenter au moins en partie sous la forme de clichés aériens et/ou par satellites dans lesquels la résolution varie en fonction d'au moins un paramètre structurel décrivant la densité de population et/ou la densité de construction dans le secteur concerné.

12. CD, DVD ou HD pour un dispositif de mémoire (3) selon la revendication 11 sur lequel des données d'informations cartographiques sont mémorisées pour traitement par un dispositif de traitement (2) du système de navigation (1), les données d'informations cartographiques comportant des surfaces à représenter au moins en partie sous la forme de clichés aériens et/ou par satellites dans lesquels la résolution varie en fonction d'au moins un paramètre structurel décrivant la densité de population et/ou la densité de construction dans le secteur concerné.
